# EUROPÄISCHE PATENTSCHRIFT

(11) **EP 0 564 785 B1**
(45) Veröffentlichungstag und Bekanntmachung des Hinweises auf die Patenterteilung: **18.10.1995**
(21) Anmeldenummer: 93102198.4
(22) Anmeldetag: 12.02.1993
(51) Int. Cl.: B23B 5/16

(54) **Vorrichtung zur Bearbeitung von Rohrenden**
Devices for working tube ends
Dispositif à usiner les extrémités de tubes

(30) Priorität: 06.04.1992 DE 9204721 U
(43) Veröffentlichungstag der Anmeldung: 13.10.1993
(73) Patentinhaber: Büker, Emil, D-40668 Meerbusch-Lank (DE)
(72) Erfinder: Büker, Emil, W-4005 Meerbusch 3-Lank (DE); Strempel, Heinrich, W-4000 Düsseldorf 1 (DE)
(74) Vertreter: Stenger, Watzke & Ring Patentanwälte

(56) Entgegenhaltungen:
- FR-A- 2 102 246
- GB-A- 890 815
- US-A- 3 131 599
- US-A- 3 228 268
- US-A- 4 655 108

## Beschreibung

Die Erfindung betrifft eine Vorrichtung zur Bearbeitung von Rohrenden mit einem Gehäuse, das mit einer verstellbaren Spanneinrichtung zum lagefesten Verbinden der Vorrichtung mit dem zu bearbeitenden Rohr versehen ist, sowie mit einer durch einen Motor angetriebenen und das Werkzeug, insbesondere Fräswerkzeug, tragenden Werkzeugspindel, welche mittels eines von Hand über ein Handrad verstellbaren Vorschubs bezüglich des Rohrendes verfahrbar ist, indem die Drehbewegung des Handrades auf ein in axialer Richtung lagefestes Vorschubelement übertragen wird, das mit einem Feingewinde versehen ist, in das ein entsprechendes Gegengewinde einer drehfesten Spindelmutter eingreift (siehe US-A-3,228,268).

Es ist bekannt, die Befestigung eines Gerätes zur Bearbeitung von Rohrenden an dem jeweils zu bearbeitenden Rohr mittels zweier Spannbacken durchzuführen, von denen die eine Spannbacke fest und die andere Spannbacke verstellbar an dem Gehäuse des Gerätes ausgebildet ist. Nachteilig hierbei ist, daß das Gerät nur an solchen Rohren in ausreichender Weise befestigt werden kann, die eine Mindestwandstärke aufweisen. Bei einer Befestigung an dünnwandigen Rohren hingegen kann es aufgrund der Spannkräfte zu Formänderungen des Rohrendes kommen. Dies führt dann zu einer Exzentrizität bei der Bearbeitung des Rohrendes, beispielsweise der Herstellung einer 45°-Fase, so daß ein in solcher Art und Weise bearbeitetes Rohrende nicht die für eine Weiterverarbeitung erforderliche Genauigkeit der Passflächen aufweist.

Zwar sind Spannzeuge bekannt, mit denen sich auch dünnwandige Rohre unter weitgehender Wahrung der Zentrizität der Rohre spannen lassen, jedoch haben derartige Spannzeuge in der Regel weit ausladend gestaltete Bedienteile, etwa in Form von Hebeln. Solche Spannzeuge sind nur dort sinnvoll einsetzbar, wo diese Bedienteile aufgrund ihrer Lage und Anordnung nicht mit anderen Bedienteilen des Gerätes oder der Maschine kollidieren und sich bei der Handhabung gegenseitig behindern.

Eine Vorrichtung der einleitend angegebenen Art ist aus der US-A 3,228,268 bekannt. Das Werkzeug wird hierbei von einer Hohlwelle getragen, die über einen Passstift mit einer Antriebsspindel verbunden ist. Der Passstift stellt die drehfeste Verbindung zwischen der axial unbeweglichen Antriebsspindel und der axial verschiebbaren Hohlwelle her. Der axiale Antrieb der Hohlwelle erfolgt über ein in dem Gerätegehäuse geführtes Vorschubelement, welches an seinem rückwärtigen Ende mit einem Außengewinde versehen ist. Das Außengewinde kämmt mit dem Innengewinde einer Antriebsmutter, die wiederum mit einem Schneckenrand, auf dem ein Handrad befestigt ist, kämmt. Die Achse von Schneckenrad und Handrad verläuft hierbei quer zur Drehachse des Werkzeuges. Zur Erzeugung eines Vorschubes wird mittels des Handrades das Schneckenrad gedreht, was zu einer Drehbewegung der Mutter führt. Da diese axial nicht beweglich ist, überträgt sich die Drehbewegung der Mutter über deren Innenverzahnung auf das Vorschubelement, und damit auf das Werkzeug. Nachteilig bei dieser bekannten Vorrichtung sind die Reibungskräfte, die durch Zweiteilung der Antriebswelle in eine in Längsrichtung feststehende Antriebsspindel sowie eine in Längsrichtung bewegliche Hohlwelle entstehen. Der Vorschub arbeitet dadurch nicht immer exakt und spielfrei.

Der Erfindung liegt die **Aufgabe** zugrunde, eine besonders exakt und spielfrei arbeitende Vorrichtung zur Bearbeitung von Rohrenden zu schaffen.

Zur **Lösung** wird bei einer Vorrichtung der eingangs genannten Art vorgeschlagen, daß das Vorschubelement als Spindel ausgebildet ist, an der das Feingewinde als Außengewinde angeordnet ist, und daß die Spindelmutter in dieses Außengewinde eingreift und mit einer radialen Verlängerung zum axialen Verschieben der Werkzeugspindel versehen ist.

Mit einer solchen Vorrichtung ergibt sich trotz der relativ weit von der Bearbeitungsstelle entfernten Anordnung des Handrades ein exakter und spielfreier Vorschub der Werkzeugspindel.

Das Handrad kann an der dem Rohr abgewandten Rückseite des Gehäuses angeordnet sein. Auf diese Weise ist die Anordnung des Handrades derart, daß gegenseitige Behinderungen bei Betätigung des Handrades einerseits und anderer Bedienteile der Vorrichtung andererseits vermieden werden. Insbesondere wird eine räumliche Trennung des Handrades von den Bedienteilen der Spanneinrichtung erreicht, so daß hier Kollisionen und gegenseitige Behinderungen ausgeschlossen sind. Zudem führt die Anordnung des Handrades auf der dem Rohr abgewandten Seite der Spanneinrichtung zu einer insgesamt griffgünstigen Lage des Handrades, so daß dem Bediener der Vorrichtung während der Bearbeitung ein bequemes und damit entspanntes Arbeiten bei zugleich guter Aussicht auf Werkzeug und Rohrende möglich ist.

Von Vorteil ist es ferner, wenn die radiale Verlängerung mit einer Öffnung zum Durchtritt der Werkzeugspindel versehen ist.

Eine weitere Ausgestaltung ist gekennzeichnet durch ein Kegelradgetriebe zur Übertragung der Antriebsleistung des Motors auf die Werkzeugspindel. Durch die Verwendung eines Kegelradgetriebes läßt sich die vorzugsweise als Druckluftmotor ausgebildete Antriebsquelle unterhalb des Gehäuses anordnen, was zu einer günstigen Lage des Schwerpunktes der Vorrichtung und damit zu einer weiteren Verbesserung von deren Handhabung führt.

Bei einer Vorrichtung der eingangs genannten Art ist es wünschenswert, diese so weiterzubilden, daß sich auch dünnwandige Rohre exakt bearbeiten lassen. Dies wird dann erreicht, wenn die Spanneinrichtung aus einer zwischen zwei Spannbacken einsetzbaren Spannhülse besteht, deren Spannflächen bündig am Umfang des eingespannten Rohrabschnittes anliegen. Durch das gleichmäßige Spannen über den Rohrumfang werden Exzentrizitäten des Rohrendes vermieden, so daß sich die Bearbeitungsgenauigkeit bei dünnwandigen Rohren beträchtlich erhöht. Zur Bearbeitung dickwandiger Rohre läßt sich die Spannhülse zwischen den Spannbacken herausnehmen, so daß die notwendige Spannkraft dann ausschließlich durch die an den Spannbacken ausgebildeten Spannflächen aufgebracht wird. Diese Lösung führt dazu, daß sich die Vorrichtung universell zur Bearbeitung sowohl dick- als auch dünnwandiger Rohre einsetzen läßt.

Eine Weiterbildung sieht vor, daß die Spannflächen an einer über eine Kegelfäche an einem Innenkonus der Spannhülse anliegenden, spreizbaren Spannzange ausgebildet sind.

Schließlich wird mit einer bevorzugten Ausgestaltung vorgeschlagen, daß sich die Spannzange axial an einem Spannring abstützt, der in einem Axialgewinde der Spannhülse geführt und mit mindestens einem radial abstehenden Bedienhebel versehen ist.

Weitere Einzelheiten und Vorteile einer bevorzugten Ausführung ergeben sich aus der nachfolgenden Beschreibung einer Vorrichtung zur Bearbeitung von Rohrenden anhand der beigefügten Zeichnungen. Darin zeigen:
- Fig. 1: eine teilweise geschnittene Seitenansicht einer Vorrichtung zur Bearbeitung von Rohrenden mit einer Spanneinrichtung, einem Werkzeug sowie einem Teil eines Rohres und
- Fig. 2: einen vergrößerten Schnitt durch die Vorrichtung nach Fig. 1 unter Weglassung der Spanneinrichtung, des Werkzeuges und des Rohres.

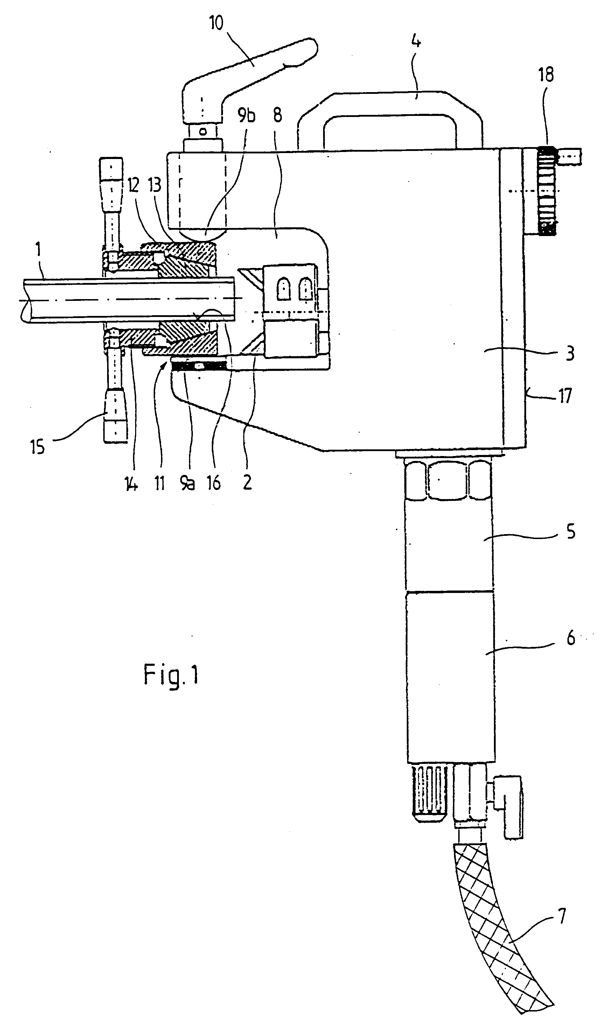

Die in Fig. 1 dargestellte Vorrichtung dient dazu, das Ende eines eingespannten Rohres 1 mittels eines spanenden Werkzeuges 2 zu bearbeiten. Das Werkzeug 2 ist beim Ausführungsbeispiel als Fräswerkzeug ausgebildet, mit dem sich die Stirnfläche des Rohres 1 bearbeiten läßt. Die Führung und Lagerung des Werkzeuges 2 erfolgt in einem Gehäuse 3, welches transportabel ausgebildet ist und zu diesem Zweck an seiner Oberseite einen Tragegriff 4 aufweist. An der Unterseite des Gehäuses 3 ist ein zylindrisches Motorgehäuse 5 mit einem Motor 6 angeflanscht. Bei dem Motor 6 handelt es sich um einen Druckluftmotor, zu dessen externer Druckluftversorgung ein über ein Ventil absperrbarer Druckluftschlauch 7 vorgesehen ist.

In der in Fig. 1 dargestellten Seitenansicht verfügt das Gehäuse 3 über eine große, klauenförmige Aussparung 8, an deren nach oben sowie nach unten gerichteten Innenflächen Spannbacken 9a,9b angeordnet sind. Die untere Spannbacke 9a ist fest, während die obere Spannbacke 9b in Richtung auf die untere Spannbacke 9a verstellbar ausgebildet ist. Die Verstellung erfolgt hierbei mittels eines auf der Oberseite des Gehäuses 3 angeordneten Handhebels 10.

Zwischen den beiden Spannbacken 9a,9b angeordnet und von diesen gehalten ist eine verstellbare Spanneinrichtung 11 zum Spannen dünnwandiger Rohre. Die Spanneinrichtung 11 besteht aus einer von den beiden Spannbacken 9a,9b gehaltenen, äußeren Spannhülse 12, einer inneren Spannzange 13 sowie einem Spannring 14 mit zwei sich radial erstreckenden Bedienhebeln 15. Die Innenfläche der Spannhülse 12 sowie die Außenfläche der Spannzange 13 sind konisch ausgebildet und liegen bündig aufeinander. Der Spannring 14 ist mit einem Außengewinde versehen, welches in ein Innengewinde der Spannhülse 12 eingreift. Wird der Spannring 14 mittels der beiden Bedienhebel 15 im Sinne eines Schließens der Spanneinrichtung 11 gedreht, so führt diese Drehung zu einer Axialbewegung des Spannrings 14 und damit auch der axial am Spannring 14 anliegenden Spannzange 13. Infolge der konischen Flächen führt diese Axialbewegung der Spannzange 13 zu einer Verringerung von deren Innendurchmesser, so daß sich dort ausgebildete Spannflächen 16 bündig an den Umfang des eingespannten Rohres 1 anlegen und dieses festhalten. Die radiale Elastizität der Spannzange 13 wird durch geeignete axiale Einschnitte oder durch eine entsprechende Auswahl des Materials der Spannzange 13 erreicht.

An der dem Rohr 1 abgewandten Rückseite 17 des Gehäuses 3 ist ein geriffelt ausgebildetes und mit einer Kurbel versehenes Handrad 18 angeordnet. Mit dem Handrad 18 läßt sich ein in dem Gehäuse 3 angeordneter Vorschub für das Werkzeug 2 von Hand einstellen. Da sich das Handrad 18 auf der dem Rohr 1 abgewandten Seite der Spanneinrichtung 11 befindet, sind gegenseitige Behinderungen bei der Bedienung des Spannrades 18 einerseits und des Bedienhebels 15 der Spanneinrichtung 11 andererseits ausgeschlossen.

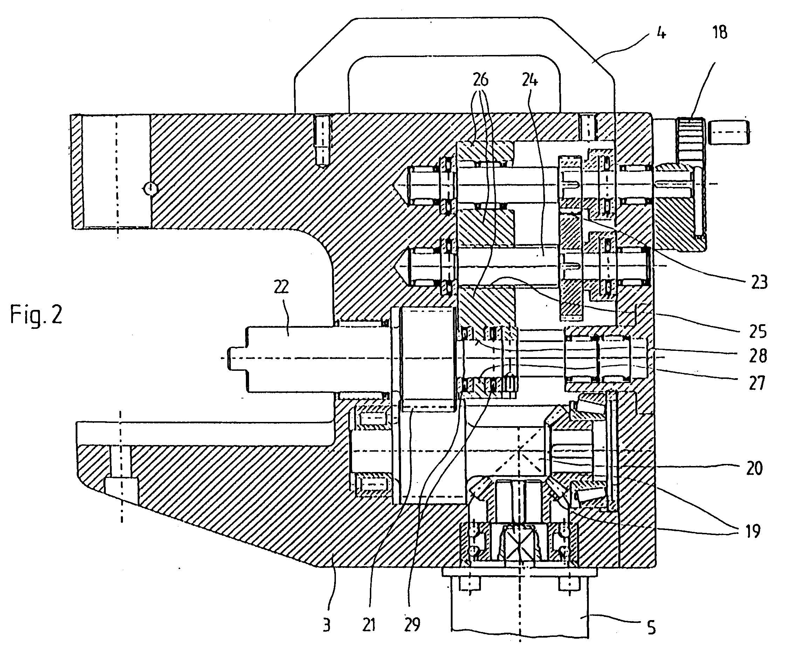

Einzelheiten des Vorschubs sowie des Antriebs des Werkzeuges werden nachfolgend anhand der Fig. 2 erläutert.

Die Antriebsleistung des in dem Motorgehäuse 5 angeordneten Druckluftmotors wird über ein Kegelradgetriebe 19 im rechten Winkel auf eine Zwischenwelle 20 und von dort über ein Stirnradgetriebe 21 auf eine das Werkzeug tragende Werkzeugspindel 22 übertragen. Zur Bereitstellung des erforderlichen Werkzeugvorschubes ist die Werkzeugspindel 22 axial verschiebbar ausgebildet. Hierzu wird die über das Handrad 18 eingeleitete Vorschubbewegung zunächst über ein Stirnradgetriebe 23 auf eine Vorschubspindel 24 übertragen. Auf der Vorschubspindel 24 ist über ein axiales Feingewinde 25 eine mit einem entsprechenden Gegengewinde versehene Spindelmutter 26 unverdrehbar angeordnet. Die Spindelmutter bildet eine Art Vorschubgabel und weist hierzu eine radiale Verlängerung 27 zum axialen Verschieben der Werkzeugspindel 22 auf. Die radiale Verlängerung 27 verfügt hierzu über eine Öffnung 28 zum Durchtritt der Werkzeugspindel 22, wobei die radiale Verlängerung 27 außerhalb der Öffnung 28 axial an Axiallagern 29 anliegt, die sich wiederum an Absätzen der Werkzeugspindel 22 abstützen. Auf diese Weise führt ein Verdrehen des Handrades 18 über eine axiale Verlagerung der Spindelmutter 26 entlang des Feingewindes 25 zu einer axialen Bewegung und damit einem Vorschub bzw. einem Rückzug des Werkzeuges relativ zu dem Rohrende.

### Bezugszeichenliste

- 1: Rohr
- 2: Werkzeug
- 3: Gehäuse
- 4: Tragegriff
- 5: Motorgehäuse
- 6: Motor
- 7: Druckluftschlauch
- 8: Aussparung
- 9a: Spannbacke
- 9b: Spannbacke
- 10: Handhebel
- 11: Spanneinrichtung
- 12: Spannhülse
- 13: Spannzange
- 14: Spannring
- 15: Bedienhebel
- 16: Spannflächen
- 17: Rückseite
- 18: Handrad
- 19: Kegelradgetriebe
- 20: Zwischenwelle
- 21: Stirnradgetriebe
- 22: Werkzeugspindel
- 23: Stirnradgetriebe
- 24: Vorschubspindel
- 25: Feingewinde
- 26: Spindelmutter
- 27: radiale Verlängerung
- 28: Öffnung
- 29: Axiallager

## Patentansprüche

1. Vorrichtung zur Bearbeitung von Rohrenden mit einem Gehäuse, das mit einer verstellbaren Spanneinrichtung zum lagefesten Verbinden der Vorrichtung mit dem zu bearbeitenden Rohr versehen ist, sowie mit einer durch einen Motor (6) angetriebenen und das Werkzeug (2), insbesondere Fräswerkzeug, tragenden Werkzeugspindel (22), welche mittels eines von Hand über ein Handrad (18) verstellbaren Vorschubs bezüglich des Rohrendes verfahrbar ist, indem die Drehbewegung des Handrades (18) auf ein in axialer Richtung lagefestes Vorschubelement (24) übertragen wird, das mit einem Feingewinde (25) versehen ist, in das ein entsprechendes Gegengewinde einer drehfesten Spindelmutter (26) eingreift,
**dadurch gekennzeichnet,**
daß das Vorschubelement (24) als Spindel ausgebildet ist, an der das Feingewinde (25) als Außengewinde angeordnet ist, und daß die Spindelmutter (26) in dieses Außengewinde eingreift und mit einer radialen Verlängerung (27) zum axialen Verschieben der Werkzeugspindel (22) versehen ist.

2. Vorrichtung nach Anspruch 1, dadurch gekennzeichnet, daß das Handrad (18) an der dem Rohr (1) abgewandten Rückseite (17) des Gehäuses (3) angeordnet ist.

3. Vorrichtung nach Anspruch 1, dadurch gekennzeichnet, daß die radiale Verlängerung (27) mit einer Öffnung (28) zum Durchtritt der Werkzeugspindel (22) versehen ist.

4. Vorrichtung nach Anspruch 1, gekennzeichnet durch ein Kegelradgetriebe (19) zur Übertragung der Antriebsleistung des Motors (6) auf die Werkzeugspindel (22).

5. Vorrichtung nach einem der Ansprüche 1 bis 4, dadurch gekennzeichnet, daß die Spanneinrichtung (11) aus einer zwischen zwei Spannbacken (9a,9b) einsetzbaren Spannhülse (12) besteht, deren Spannflächen (16) bündig am Umfang des eingespannten Rohrabschnittes anliegen.

6. Vorrichtung nach Anspruch 5, dadurch gekennzeichnet, daß die Spannflächen (16) an einer über eine Kegelfläche an einem Innenkonus der Spannhülse (12) anliegenden, spreizbaren Spannzange (13) ausgebildet ist.

7. Vorrichtung nach Anspruch 6, dadurch gekennzeichnet, daß sich die Spannzange (13) axial an einem Spannring (14) abstützt, der in einem Axialgewinde der Spannhülse (12) geführt und mit mindestens einem radial abstehenden Bedienhebel (15) versehen ist.

## Claims

1. Device for machining tube ends with a housing which is equipped with an adjustable clamping device for rigid connection of the device with the tube to be machined, as well as with a tool spindle (22) driven by a motor (6) and which holds the tool (2), in particular a milling tool, which can be made to travel using a handwheel (18) with manually adjustable feed in relation to the tube end by transmitting the rotary movement of the handwheel (18) to a feed element (24) stationary in the axial direction, which is equipped with a fine screw thread (25) inside which engages a corresponding counter thread of a torsionally-rigid feed nut (26),
characterised by the fact that
the feed element (24) is designed in the form of a screw onto which the fine screw thread (25) is arranged as external thread, and that the feed nut (26) engages in this external thread and is equipped with a radial extension (27) for axial displacement of the tool spindle (22).

2. Device based on Claim 1, characterised by the fact that the handwheel (18) is arranged on the rear side (17) of the housing (3) which faces away from the tube (1).

3. Device based on Claim 1, characterised by the fact that the radial extension (27) is equipped with an aperture (28) for entry of the tool spindle (22).

4. Device based on Claim 1, characterised by a bevel gearing (19) for transmission of the driving power of the motor (6) to the tool spindle (22).

5. Device based on one of the Claims 1 to 4, characterised by the fact that the clamping device (11) consists of a clamping sleeve (12) able to be inserted between two grip jaws (9a,9b) and whose clamping surfaces (16) lie flush with the circumference of the clamped tube section.

6. Device based on Claim 5, characterised by the fact that the clamping surfaces (16) are formed by an expanding chuck (13) the conical surface of which fits inside the inside taper of the clamping sleeve (12).

7. Device based on Claim 6, characterised by the fact that the chuck (13) is axially supported on a locking ring (14) which is guided in an axial thread of the clamping sleeve (12) and is equipped with at least one radially projecting operating lever (15).

## Revendications

1. Dispositif d'usinage des extrémités de tubes avec un châssis, pourvu d'un dispositif de serrage réglable pour assurer une liaison au positionnement fixe du dispositif avec le tube à usiner, ainsi que d'une broche porte-outil (22) entraînée par un moteur (6) et portant l'outil (2), notamment l'outil de fraisage, laquelle est déplaçable au moyen d'une avance par rapport à l'extrémité du tube, réglable manuellement par un volant (18), en transmettant le mouvement de rotation du volant (18) à un élément d'avance (24) positionné fixement dans le sens axial, pourvu d'un filet à pas fin (25), dans lequel engrène un contre-filet correspondant d'un écrou de broche (26) résistant à la torsion, **caractérisé** en ce que l'élément d'avance (24) est conçu comme broche, sur laquelle le filet à pas fin (25) est disposé comme filet extérieur et en ce que l'écrou de broche (26) engrène dans ce filet extérieur et pourvu d'une rallonge (27) radiale pour le déplacement axial de la broche porte-outil (22).

2. Dispositif selon la revendication 1, caractérisé en ce que le volant (18) est disposé à la face arrière (17) du châssis (3) opposé au tube (1).

3. Dispositif selon la revendication 1, caractérisé en ce que la rallonge radiale (27) est pourvue d'un orifice (28) de passage de la broche porte-outil (22).

4. Dispositif selon la revendication 1, caractérisé par un engrenage à roues coniques (19) pour la transmission de la puissance d'entraînement du moteur (6) à la broche porte-outil (22).

5. Dispositif selon l'une des revendications 1 à 4, caractérisé en ce que le dispositif de serrage (11) se compose d'un manchon de serrage (12) pouvant être monté entre deux mors de serrage (9a, 9b), dont les surfaces de serrage (16) adhèrent au ras de la circonférence de la section du tube monté dans le dispositif de serrage.

6. Dispositif selon la revendication 5, caractérisé en ce que les surfaces de serrage (16) sont formées sur une pince de serrage (13) extensible adhérant à un cône intérieur du manchon de serrage (12) par une surface conique.

7. Dispositif selon la revendication 6, caractérisé en ce que la pince de serrage (13) s'appuie axialement sur une bague de serrage (14) conduite dans un filet axial du manchon de serrage (12) et pourvue d'au moins un levier de commande (15) distant radialement.
